# EUROPÄISCHE PATENTSCHRIFT

(11) **EP 3 688 502 B1**
(45) Veröffentlichungstag und Bekanntmachung des Hinweises auf die Patenterteilung: **07.06.2023**
(21) Anmeldenummer: 18755151.0
(22) Anmeldetag: 02.08.2018
(51) Int. Cl.: G02B 5/30, G02B 21/00, G02B 27/28

(54) **VORRICHTUNG FÜR DAS SELEKTIVE FORMEN VON PHASENFRONTEN EINES LICHTSTRAHLS UND DEREN VERWENDUNG**
APPARATUS FOR SELECTIVELY SHAPING PHASE FRONTS OF A LIGHT BEAM, AND USE THEREOF
PROCÉDÉ DE FORMATION SÉLECTIVE DE FRONTS DE PHASE D'UN FAISCEAU LUMINEUX ET UTILISATION DUDIT DISPOSITIF

(30) Priorität: 27.09.2017 DE 102017122413
(43) Veröffentlichungstag der Anmeldung: 05.08.2020
(73) Patentinhaber: Abberior Instruments GmbH, 37077 Göttingen (DE)
(72) Erfinder: REUSS, Matthias, 37083 Göttingen (DE); FISCHER, Joachim, 76228 Karlsruhe (DE)
(74) Vertreter: REHBERG HÜPPE + PARTNER
(86) Internationale Anmeldenummer: PCT/EP2018/071018
(87) Internationale Veröffentlichungsnummer: WO 2019/063166

(56) Entgegenhaltungen:
- WO-A1-2010/133678
- WO-A1-2011/086519
- WO-A1-2017/067998
- REUSS M ET AL: "Birefringent device converts a standard scanning microscope into a STED microscope that also maps molecular orientation", OPTICS EXPRESS, OSA PUBLISHING, US, Bd. 18, Nr. 2, 18. Januar 2010 (2010-01-18), Seiten 1049-1058, XP002592880, ISSN: 1094-4087, DOI: 10.1364/OE.18.001049 [gefunden am 2010-01-07]
- MACHAVARIANI ET AL: "Spatially-variable retardation plate for efficient generation of radially- and azimuthally-polarized beams", OPTICS COMMUNICATIONS, ELSEVIER, AMSTERDAM, NL, Bd. 281, Nr. 4, 20. November 2007 (2007-11-20), Seiten 732-738, XP022409152, ISSN: 0030-4018, DOI: 10.1016/J.OPTCOM.2007.10.088
- DOMINIK WILDANGER ET AL: "A STED microscope aligned by design", OPTICS EXPRESS, Bd. 17, Nr. 18, 26. August 2009 (2009-08-26), Seiten 16100-16110, XP055521947, DOI: doi.org/10.1364/OE.17.016100

## Beschreibung

### TECHNISCHES GEBIET DER ERFINDUNG

Die Erfindung betrifft eine Vorrichtung für das selektive Formen von Phasenfronten eines ersten längs einer optischen Achse einfallenden Lichtstrahls mit einer ersten linearen und orthogonal zu der optischen Achse verlaufenden Eingangspolarisationsrichtung. Insbesondere bezieht sich die Erfindung auf eine solche Vorrichtung mit den Merkmalen des unabhängigen Patentanspruchs 1 sowie auf eine Verwendung einer solchen Vorrichtung in einem gemeinsamen Strahlengang eines ersten Lichtstrahls aus Fluoreszenzverhinderungslicht und eines zweiten Lichtstrahls aus Fluoreszenzanregungslicht.

### STAND DER TECHNIK

Wenn zum Beispiel in der hochauflösenden Rasterfluoreszenzlichtmikroskopie ein Lichtstrahl aus Fluoreszenzanregungslicht und ein Lichtstrahl aus Fluoreszenzverhinderungslicht gemeinsam fokussiert werden, um in einer Probe ein Intensitätsmaximum des Fluoreszenzanregungslichts auszubilden, das mit einem Intensitätsminimum des Fluoreszenzverhinderungslichts zusammenfällt, welches von Intensitätsmaxima des Fluoreszenzverhinderungslichts begrenzt ist, können hierfür selektiv die Phasenfronten des Lichtstrahls aus Fluoreszenzverhinderungslicht verformt werden. Um diese selektive Verformung zu erreichen, können die beiden Lichtstrahlen aus Fluoreszenzanregungslicht und Fluoreszenzverhinderungslicht erst dann zusammengeführt werden, nachdem die Phasenfronten des Fluoreszenzverhinderungslichts verformt wurden. Alternativ kann in einem gemeinsamen Strahlengang der beiden Lichtstrahlen eine Vorrichtung angeordnet werden, die selektiv die Phasenfronten des Lichtstrahls aus Fluoreszenzverhinderungslicht verformt, während sie die Phasenfronten des Lichtstrahls aus Fluoreszenzanregungslicht nicht oder nur so verformt, dass dies keine Auswirkungen auf die Ausbildung des zentralen Intensitätsmaximums des fokussierten Fluoreszenzanregungslichts hat. In der STED-Fluoreszenzlichtmikroskopie ist dieses Konzept als easySTED bekannt, und die entsprechenden Vorrichtungen werden als easySTED-Phasenplatten bezeichnet.

Ein als easySTED-Phasenplatte verwendbarer wellenlängen- oder polarisationssensitiver optischer Aufbau und dessen Verwendung sind aus der DE 10 2007 025 688 A1 bekannt. Von dem optischen Aufbau werden Phasenfronten einer Lichtkomponente verformt, während Phasenfronten einer anderen Lichtkomponente, die sich von der einen Lichtkomponente in ihrer Wellenlänge oder ihrer Polarisation unterscheidet, nicht verformt werden. Ein optisches Bauteil des optischen Aufbaus weist über seiner aktiven Fläche eine Unstetigkeit oder eine lokale Variation von mindestens π/2 bei einer Phasenverzögerung auf, die es selektiv der einen Lichtkomponente aufprägt. Konkret weist die optisch aktive Fläche des optischen Bauteils einen kreisrunden Zentralbereich und eine sich darum kreisringförmig erstreckende Peripherie auf, zwischen denen der Unterschied bei der Phasenverzögerung der einen Lichtkomponente π beträgt, oder das optische Bauteil prägt der einen Lichtkomponente einen in Umfangsrichtung um seine optische Achse bis auf 2π zunehmenden Anstieg in der Phasenverzögerung auf. Eine Phasenplatte mit einer solchen kontinuierlich zunehmenden Phasenverzögerung wird auch als Phasenuhr bezeichnet. Wenn sich die beiden Lichtkomponenten in ihrer Polarisation unterscheiden, weist das optische Bauteil doppelbrechende optische Eigenschaften auf. Zur Bereitstellung der doppelbrechenden optischen Eigenschaften kann das optische Bauteil auf einem Flüssigkristallpolymer, in dem Flüssigkristalle eine dauerhafte Orientierung aufweisen, oder auf einem doppelbrechenden Kristall aufbauen. Wenn sich die beiden Lichtkomponenten in ihrer Polarisation unterscheiden, kann auch ein Spatial-Light-Modulator, z. B. auf der Basis von Flüssigkristallen, als das optische Bauteil eingesetzt werden. Mit einem Spatial-Light-Modulator kann die Form der Phasenfronten einer linear polarisierten ersten Lichtkomponente in weiten Grenzen gestaltet werden, während er die Phasenfronten einer orthogonal zu der ersten Lichtkomponente polarisierten zweiten Lichtkomponente unverändert lässt.

Aus der WO 2010/133678 A1 ist ein Fluoreszenzlichtmikroskop mit einer doppelbrechenden Vorrichtung zur Strahlformung bekannt. Die Vorrichtung zur Strahlformung weist ein doppelbrechendes chromatisches optisches Element auf, das eine Polarisationsverteilung eines Lichtstrahls aus Fluoreszenzverhinderungslicht über dessen Strahlquerschnitt so formt, dass das anschließend fokussierte Fluoreszenzverhinderungslicht eine Intensitätsverteilung mit einer Intensitätsnullstelle am Fokuspunkt aufweist. Das doppelbrechende chromatische optische Element lässt hingegen einen Lichtstrahl aus Fluoreszenzanregungslicht mit einer anderen Wellenlänge als derjenigen des Fluoreszenzverhinderungslichts soweit unberührt, dass das fokussierte Fluoreszenzanregungslicht ein Maximum am Fokuspunkt aufweist. Das doppelbrechende chromatische optische Element besteht aus einer segmentierten chromatischen λ/2-Platte, wobei das doppelbrechende Material der λ/2-Platte unterschiedliche Orientierungen seiner schnellen Achse in den einzelnen Segmenten aufweist. Konkret umfasst die chromatische λ/2-Platte Kreissegmente von gleicher Größe und gleichen Unterschieden in der Orientierung der schnellen Achse von Kreissegment zu Kreissegment um eine optische Achse des optischen Aufbaus. Bei dieser Vorrichtung zur Strahlformung basiert die Ausbildung der Nullstelle des Fluoreszenzverhinderungslichts am Fokuspunkt auf der Polarisationsverteilung über seinem Strahlquerschnitt.

Aus D. Wildanger et al., "A STED microscope aligned by design", Opt. Exp. 17 (18), 16100-16110 (2009) ist eine segmentierte chromatische Strahlformungseinrichtung zum Implementieren des easySTED-Konzepts bekannt, die aus drei um eine optische Achse herum angeordneten Kreissegmenten besteht. Von den verschiedenen Kreissegmenten werden Wellenfronten eines Lichtstrahls aus Fluoreszenzverhinderungslicht unterschiedlich verzögert, während die gesamten Wellenfronten eines Lichtstrahls aus Fluoreszenzanregungslicht eben bleiben. Zu diesem Zweck besteht jedes der drei Kreissegmente aus zwei optischen Platten aus Materialien, deren Brechungsindizes bei der Wellenlänge des Fluoreszenzanregungslichts gleich sind, sich aber signifikant bei der Wellenlänge des Fluoreszenzverhinderungslichts unterscheiden. Bei gleicher Dicke aller Paare von optischen Platten, die längs der optischen Achse gestapelt sind, sind die Phasenverzögerungen, die bei der Wellenlänge des Fluoreszenzanregungslichts eingeführt werden, für alle Paare gleich, während die Phasenverzögerungen des Fluoreszenzverhinderungslichts eine Funktion des Brechungsindexunterschieds zwischen den beiden optischen Platten und der relativen Dicke der beiden optischen Platten jedes Paars sind.

Alle bekannten Konzepte für eine chromatische easySTED-Phasenplatte haben den Nachteil, dass sie nur über kleine Wellenlängenbereiche der Wellenlänge des Anregungslichts und/oder des Fluoreszenzverhinderungslichts in der gewünschten Weise wirksam sind. Zudem sind sie ungeeignet, um Lichtstrahlen aus Anregungslicht und Fluoreszenzverhinderungslicht, die sich nicht in ihren Wellenlängen, sondern in ihren Intensitäten unterscheiden, wie dies beispielsweise bei der RESOLFT-Fluoreszenzlichtmikroskopie mit schaltbaren Molekülen der Fall sein kann, unterschiedlich zu formen. Das aus der DE 10 2007 025 688 A1 bekannte Konzept für eine easySTED-Phasenplatte, das von unterschiedlichen Polarisationen des Anregungslichts und des Fluoreszenzverhinderungslichts Gebrauch machen soll, bleibt bis auf die Ausführungsform mit einem Spatial-Light-Modulator so unkonkret, dass ein Nacharbeiten nicht möglich ist.

Aus der DE 10 2012 010 207 A1 ist ein Mikroskop mit einer Phasenplatte für das selektive Formen von Phasenfronten eines ersten längs einer optischen Achse einfallenden Lichtstrahls mit einer ersten linearen und orthogonal zu der optischen Achse verlaufenden Eingangspolarisationsrichtung bekannt. Die kreisförmige Phasenplatte, die die Merkmale des Oberbegriffs des unabhängigen Patentanspruchs 1 aufweist, besteht aus zwei halbkreisförmigen Elementen, die einander über die optische Achse hinweg gegenüberliegen. Das eine Element ist eine λ/2-Platte aus einem doppelbrechenden Material. Das andere Element besteht aus Glas. Tritt ein parallel zu der außerordentlichen Achse der λ/2-Platte polarisierter Lichtstrahl durch die Phasenplatte hindurch, wird in der λ/2-Platte eine Phasenverschiebung um eine halbe Wellenlänge relativ zu dem Element aus Glas erzeugt. Ist die Polarisation des Lichtstrahls hingegen senkrecht zu der außerordentlichen Achse der λ/2-Platte, wird keine relative Phasenverzögerung erzeugt. Die DE 10 2012 010 207 A1 offenbart auch noch eine weitere Ausführungsform der Phasenplatte, die nicht dem Oberbegriff des unabhängigen Patentanspruchs 1 entspricht und bei der die Phasenplatte in vier gleich große, in Umfangsrichtung um die optische Achse aufeinanderfolgende kreissegmentförmige Elemente unterteilt ist. Die Elemente sind abwechselnd λ/2-Platten und Elemente aus Glas, so dass sich über die optische Achse hinweg die beiden λ/2-Platten einerseits und die Elemente aus Glas andererseits gegenüberliegen. Beim Fokussieren des Lichtstrahls mit der ersten linearen und orthogonal zu der optischen Achse verlaufenden Eingangspolarisationsrichtung bildet sich eine Intensitätsverteilung mit einem von Intensitätsmaxima umgebenen lokalen Intensitätsminimum aus, das auf dem Phasenversatz von λ/2 zwischen den durch die Phasenplatten hindurchtretenden Anteilen des Lichtstrahls und den durch die Elemente aus Glas hindurchtretenden Anteilen des Lichtstrahls basiert.

### AUFGABE DER ERFINDUNG

Der Erfindung liegt die Aufgabe zugrunde, eine Vorrichtung für das selektive Formen von Phasenfronten eines ersten längs einer optischen Achse einfallenden Lichtstrahls aufzuzeigen, die bei ihrer Anwendung als easySTED-Phasenplatte sowohl für unterschiedliche Wellenlängen des zu formenden Fluoreszenzverhinderungslichts als auch für unterschiedliche Wellenlängen des nicht zu formenden Fluoreszenzanregungslichts geeignet ist und bei der das Fluoreszenzverhinderungslicht und das Fluoreszenzanregungslicht selbst gleiche Wellenlängen aufweisen können.

### LÖSUNG

Die Aufgabe der Erfindung wird durch eine Vorrichtung mit den Merkmalen des unabhängigen Patentanspruchs 1 gelöst. Die Patentansprüche 2 bis 14 betreffen bevorzugte Ausführungsformen der erfindungsgemäßen Vorrichtung. Der Patentanspruch 15 ist auf eine Verwendung der erfindungsgemäßen Vorrichtung gerichtet.

### BESCHREIBUNG DER ERFINDUNG

Die erfindungsgemäße Vorrichtung formt selektiv Phasenfronten eines ersten längs einer optischen Achse einfallenden Lichtstrahls mit einer ersten linearen und orthogonal zu der optischen Achse verlaufenden Eingangspolarisationsrichtung. Die Vorrichtung weist doppelbrechendes optisches Material auf. Sie verzögert eine erste Phase des ersten Lichtstrahls in mindestens drei verschiedenen Teilbereichen der Vorrichtung verschieden, während sie eine zweite Phase eines zweiten längs der optischen Achse einfallenden Lichtstrahls mit einer zu der ersten linearen Eingangspolarisationsrichtung und zu der optischen Achse orthogonalen zweiten Eingangspolarisationsrichtung in den verschiedenen Teilbereichen nicht verschieden verzögert.

Hier und im Folgenden bedeutet, dass eine Phase in den verschiedenen Teilbereichen der Vorrichtung nicht verschieden verzögert wird, dass sie in den verschiedenen Teilbereichen der Vorrichtung entweder tatsächlich jeweils genau gleich oder um sich um 2π oder ein ganzzahliges Vielfaches von 2π unterscheidende Beträge verzögert wird. Diese beiden Ausführungsvarianten des Merkmals, dass die Phase des zweiten Lichtstrahls in den verschiedenen Teilbereichen der Vorrichtung nicht verschieden verzögert wird, sind zumindest so lange gleichwertig, wie die Kohärenzlänge des zweiten Lichtstrahls größer als das maximale Vielfache von 2π ist.

Bei der erfindungsgemäßen Vorrichtung folgen die verschiedenen Teilbereiche in einer Richtung um die optische Achse herum aufeinander. Dabei ist das doppelbrechende optische Material in allen oder allen bis auf einen der in der Richtung um die optische Achse herum aufeinanderfolgenden verschiedenen Teilbereich angeordnet. Bei drei verschiedenen Teilbereichen bedeutet dies, dass das doppelbrechende Material auch nur in zwei der in der Richtung um die optische Achse herum aufeinanderfolgenden verschiedenen Teilbereiche angeordnet sein kann.

Das doppelbrechende optische Material verzögert den ersten Lichtstrahl mit der ersten Eingangspolarisationsrichtung bezüglich seiner Phase in einem von Teilbereich zu Teilbereich über eine Umrundung der optischen Achse in der Richtung zunehmenden Maße. Dieses Maß kann konkret auf 2π hin zunehmen, wobei aufgrund der Zunahme der Phasenverzögerung von Teilbereich zu Teilbereich in diskreten Schritten der Wert der Phasenverzögerung von 2π selbst nicht erreicht wird.

Mit der erfindungsgemäßen Vorrichtung wird so für den ersten Lichtstrahl eine Phasenuhr angenähert. Bei nur zwei in der Richtung um die optische Achse herum aufeinanderfolgenden verschiedenen Teilbereichen wie bei der aus der DE 10 2012 010 207 A1 bekannten Phasenplatte ist diese Annäherung noch nicht erreicht, und in der Fokalebene resultiert ein linienförmiges Intensitätsminimum zwischen zwei nierenförmigen Intensitätsmaxima. Vorzugsweise wird die erste Phase des ersten Lichtstrahls in mindestens vier, noch mehr bevorzugt in mindestens sechs verschiedenen Teilbereichen der Vorrichtung verschieden verzögert, um in der Fokalebene ein möglichst punktförmiges Intensitätsminimum durch ein zusammenhängendes kreisförmiges Intensitätsmaximum zu begrenzen.

Ob die erfindungsgemäße Vorrichtung auf die Phase eines Lichtstrahls einwirkt oder nicht, hängt grundsätzlich nicht von dessen Wellenlänge ab, sondern von dessen Eingangspolarisierungsrichtung. So können der erste und der zweite Lichtstrahl auch gleiche Wellenlängen aufweisen, solange sie die erste und die dazu orthogonale zweite Eingangspolarisationsrichtungen haben.

Um die Unabhängigkeit der erfindungsgemäßen Vorrichtung von den Wellenlängen der Lichtstrahlen über einen möglichst großen Wellenlängenbereich sicherzustellen, wird das doppelbrechende optische Material in allen Teilbereichen, in denen es angeordnet ist, in einer solchen Materialkombination angeordnet, dass die verschiedenen Teilbereich in dem möglichst großen Wellenlängenbereich jeweils ein achromatisches doppelbrechendes Verhalten zeigen. Die Zusammenstellung von geeigneten Materialkombinationen zur Ausbildung derartiger achromatischer Phasenplatten ist dem Fachmann geläufig.

Die in der Richtung um die optische Achse herum aufeinanderfolgenden verschiedenen Teilbereiche der erfindungsgemäßen Vorrichtung können jeweils einen Anteil aufweisen, der in einer Projektion längs der optischen Achse kreissegmentförmig ist und in beiden Richtungen um die optische Achse an einen kreissegmentförmigen Anteil eines benachbarten Teilbereichs angrenzt. Die die kreissegmentförmigen Anteile aufweisenden Teilbereiche der Vorrichtung können beispielsweise quadratische oder andere rechteckige oder auch rautenförmige Abmessungen aufweisen. Im wirksamen Bereich der optischen Vorrichtung, über den die Lichtstrahlen einfallen, befinden sich jedoch vorzugsweise die kreissegmentförmigen Anteile der verschiedenen Teilbereiche.

Diese kreissegmentförmigen Anteile der verschiedenen Teilbereiche können sich jeweils über gleiche Winkel um die optische Achse erstrecken. Insbesondere dann kann bei *n* in der Richtung um die optische Achse herum aufeinanderfolgenden verschiedenen Teilbereichen das Maß der Verzögerung der Phasen des ersten Lichtstrahls von Teilbereich zu Teilbereich um 2π/*n* zunehmen. Mit wachsendem n nähert sich die Vorrichtung dann immer weiter an eine ideale Phasenuhr an.

Bei der erfindungsgemäßen Vorrichtung können die wirksamen Kristallachsen des doppelbrechenden Materials in allen verschiedenen Teilbereichen, die die Phase des ersten Lichtstrahls mit der ersten Eingangspolarisationsrichtung anders als die Phase des zweiten Lichtstrahls mit der dazu orthogonalen zweiten Eingangspolarisationsrichtung verzögern, parallel zueinander ausgerichtet sein. Die wirksamen Kristallachsen des doppelbrechenden Materials sind dabei so definiert, dass ein Lichtstrahl mit einer Eingangspolarisationsrichtung längs dieser wirksamen Kristallachsen stärker oder schwächer verzögert wird als ein Lichtstrahl mit einer Eingangspolarisationsrichtung orthogonal zu den wirksamen Kristallachsen. So zählen insbesondere die langsamen oder schnellen Kristallachsen des doppelbrechenden Materials zu diesen wirksamen Kristallachsen. Bei der erfindungsgemäßen Vorrichtung kann das doppelbrechende Material demnach in allen verschiedenen Teilbereichen, die die Phase des ersten Lichtstrahls anders als die Phase des zweiten Lichtstrahls verzögern, bezüglich der Orientierung seiner Kristallachsen gleich ausgerichtet sein.

In einer Ausführungsform der erfindungsgemäßen Vorrichtung ist jeder ihrer verschiedenen Teilbereiche durch ein Plattensegment einer segmentierten Phasenplatte ausgebildet. Vorzugsweise sind jedoch in jedem der verschiedenen Teilbereiche mindestens zwei Plattensegmente von mindestens zwei segmentierten Phasenplatten so angeordnet, dass sie längs der optischen Achse aufeinanderfolgen, also mindestens zwei segmentierte Phasenplatten aufeinander gestapelt sind. So kann die erfindungsgemäße Vorrichtung in allen ihren verschiedenen Teilbereichen eine gleiche Dicke aufweisen.

Besonders bevorzugt ist es, wenn eine der mindestens zwei segmentierten Phasenplatten m-mal so viele Plattensegmente wie eine andere der mindestens zwei segmentierten Phasenplatten aufweist, wobei m eine positive ganze Zahl ≥ 2 ist und wobei jeweils *m* Plattensegmente der einen der mindestens zwei segmentierten Phasenplatten auf einem Plattensegment der anderen der mindestens zwei segmentierten Phasenplatten angeordnet sind. Die jeweils *m* Plattensegmente der einen segmentierten Phasenplatte unterteilen so das eine Plattensegment der anderen der mindestens zwei segmentierten Phasenplatte *m*-fach. Die Gesamtzahl der in der Richtung um die optische Achse herum aufeinanderfolgenden Teilbereiche der erfindungsgemäßen Vorrichtung ist dabei mindestens so groß wie die Anzahl der Plattensegmente der einen der mindestens zwei segmentierten Phasenplatten. Da die andere segmentierte Phasenplatte mindestens zwei Segmente und die eine segmentierte Phasenplatte m-mal mehr Segmente aufweist, beträgt die Gesamtzahl der in der Richtung um die optische Achse herum aufeinanderfolgenden Teilbereiche der erfindungsgemäßen Vorrichtung also mindestens 2 x *m* mit *m* ≥ 2, d. h. mindestens vier.

In einer Ausführungsform der erfindungsgemäßen Vorrichtung können die segmentierten Phasenplatten auf sehr einfache Weise ausgebildet werden. Beispielsweise kann die andere der mindestens zwei segmentierten Phasenplatten zwei Plattensegmente aufweisen, die die Phase des zweiten Lichtstrahls um gleiche Beträge verzögern und die die Phase des ersten Lichtstrahls um sich um π unterscheidende Beträge verzögern. Die eine der mindestens zwei segmentierten Phasenplatten kann dabei vier Plattensegmente aufweisen, die die Phase des zweiten Lichtstrahls um gleiche Beträge verzögern und von denen zwei erste Plattensegmente die Phase des ersten Lichtstrahls gegenüber zwei zweiten Plattensegmenten um sich um π/2 unterscheidende Beträge verzögern, wobei die ersten Plattensegmente und die zweiten Plattensegmente in der Richtung um die optische Achse alternierend aufeinanderfolgen. Anders gesagt kann die Vorrichtung mit Hilfe eines als λ/2-Platte wirksamen und mit Hilfe eines neutralen Plattensegments der einen segmentierten Phasenplatte und mit Hilfe von zwei als λ/4-Platten wirksamen Plattensegmenten und zwei neutralen Plattensegmenten der anderen segmentierten Phasenplatte ausgebildet werden. Bei den von den Plattensegmenten ausgebildeten λ/2- und den λ/4-Platten kann es sich auch um solche höherer Ordnung handeln, bei denen also die selektive Verzögerung des ersten Lichtstrahls nicht nur λ/2, sondern tatsächlich (k × λ + λ/2) bzw. nicht nur λ/4, sondern tatsächlich (l × λ + λ/4) beträgt, wobei k und I voneinander unabhängige positive ganze Zahlen sind.

Die neutralen Plattensegmente oder anders gesagt alle Plattensegmente oder ganze Teilbereiche der erfindungsgemäßen Vorrichtung, die die Phase des ersten Lichtstrahls und die Phase des zweiten Lichtstrahls gleich verzögern, können dadurch ausgebildet werden, dass die optische Kristallachse des doppelbrechenden Materials parallel zu der optischen Achse der Vorrichtung ausgerichtet ist. Die optische Kristallachse eines doppelbrechenden Materials ist so definiert, dass längs dieser Kristallachse einfallendes Licht unabhängig von seiner Polarisationsrichtung gleich phasenverzögert wird. Grundsätzlich können die neutralen Plattensegmente oder Teilbereiche aber auch aus nichtdoppelbrechendem Material ausgebildet sein.

Unter Ausnutzung der voranstehenden Konstruktionsprinzipien für die erfindungsgemäße Vorrichtung können alle Teilbereiche der erfindungsgemäßen Vorrichtung oder zumindest alle Plattensegmente der jeweiligen segmentierten Phasenplatte aus demselben doppelbrechenden Material ausgebildet sein. Wie bereits angedeutet wurde, ist es damit auch möglich zu erreichen, dass alle Teilbereiche und optional auch alle Plattensegmente jeder segmentierten Phasenplatte gleiche Erstreckungen längs der optischen Achse aufweisen. Damit sind besonders gute Voraussetzungen für eine achromatische Ausbildung der gesamten Vorrichtung gegeben, da sich alle Anteile des ersten und des zweiten Lichtstrahls in allen in der Richtung um die optische Achse herum aufeinanderfolgenden Teilbereichen der Vorrichtung durch gleiche Dicken des doppelbrechenden optischen Materials hindurchbewegen, das zudem in allen diesen Teilbereichen identisch ist.

Das Konzept, alle verschiedenen Teilbereiche einer Vorrichtung für das selektive Formen von Phasenfronten eines ersten Lichtstrahls, ohne die Phasenfronten eines zweiten, anders polarisierten Lichtstrahls zu deformieren, aus doppelbrechendem optischem Material und insbesondere aus demselben doppelbrechenden optischen Material auszubilden, wobei das optische Material bereichsweise so angeordnet ist, dass seine optische Kristallachse parallel zu der optischen Achse der Vorrichtung ausgerichtet ist, wird auch unabhängig davon, ob die verschiedenen Teilbereiche in einer Richtung um die optische Achse herum aufeinander folgen und das doppelbrechende optische Material den ersten Lichtstrahl mit der ersten Eingangspolarisationsrichtung bezüglich seiner Phase in einem von Teilbereich zu Teilbereich über eine Umrundung der optischen Achse in der Richtung zunehmenden Maße verzögert, als eigenständige Erfindung angesehen. Diese eigenständige Erfindung ist in den Patentansprüchen aus Gründen der Einheitlichkeit der Erfindung nicht separat beansprucht. Eine mögliche Definition dieser eigenständigen Erfindung lautet: Vorrichtung für das selektive Formen von Phasenfronten eines ersten längs einer optischen Achse einfallenden Lichtstrahls mit einer ersten linearen und orthogonal zu der optischen Achse verlaufenden Eingangspolarisationsrichtung, wobei die Vorrichtung doppelbrechendes optisches Material aufweist, wobei die Vorrichtung eine erste Phase des ersten Lichtstrahls in mindestens zwei verschiedenen Teilbereichen der Vorrichtung verschieden verzögert und wobei die Vorrichtung eine zweite Phase eines zweiten längs der optischen Achse einfallenden Lichtstrahls mit einer zu der ersten linearen Eingangspolarisationsrichtung und zu der optischen Achse orthogonalen zweiten Eingangspolarisationsrichtung in den verschiedenen Teilbereichen nicht verschieden verzögert, dadurch gekennzeichnet, dass alle verschiedenen Teilbereiche aus demselben doppelbrechenden Material ausgebildet sind und dass die optische Kristallachse des doppelbrechenden optischen Materials in mindestens einem der verschiedenen Teilbereiche parallel zu der optischen Achse ausgerichtet ist, so dass das doppelbrechende Material die Phase des ersten Lichtstrahls und die Phase des zweiten Lichtstrahls in diesem mindestens einem der verschiedenen Teilbereiche gleich verzögert, wobei optional alle verschiedenen Teilbereiche aus demselben doppelbrechenden Material ausgebildet sind. Ausführungsformen der eigenständigen Erfindung weisen die weiteren Merkmale der Patentansprüche auf. In einer Ausführungsform der eigenständigen Erfindung, die nicht unter die Patentansprüche fällt, umfassen die verschiedenen Teilbereiche der Vorrichtung, so wie es grundsätzlich aus der DE 10 2007 025 688 A1 bekannt ist, einen kreisrunden Zentralbereich und eine sich darum kreisringförmig erstreckende Peripherie, zwischen denen der Unterschied bei der Phasenverzögerung des ersten Lichtstrahls π beträgt.

Bei der erfindungsgemäßen Vorrichtung kann vor den in der Richtung um die optische Achse herum aufeinanderfolgenden verschiedenen Teilbereichen ein Polarisationsrotator auf der optischen Achse angeordnet sein, der zwischen einem erstem und einem zweiten Zustand überführbar ist. In dem ersten Zustand ändert der Polarisationsrotator eine Polarisation eines Eingangslichtstrahls in die erste lineare Eingangspolarisationsrichtung des ersten Lichtstrahls, und in dem zweiten Zustand die Polarisation des Eingangslichtstrahls in die zweite lineare Eingangspolarisationsrichtung des zweiten Lichtstrahls. Beispielsweise kann der Polarisationsrotator eine zirkulare Polarisation des Eingangslichtstrahls alternativ in die erste und die zweite Eingangspolarisationsrichtung ändern. In einer konkreten Ausführungsform weist der Polarisationsrotator mindestens eine Pockelszelle auf. Dem Fachmann sind andere Ausführungsmöglichkeiten für den Polarisationsrotator bekannt.

Verwendet werden kann die erfindungsgemäße Vorrichtung insbesondere in einem gemeinsamen Strahlengang eines ersten Lichtstrahls aus Fluoreszenzverhinderungslicht und eines zweiten Lichtstrahls aus Fluoreszenzanregungslicht. Dabei werden dann selektiv die Phasenfronten des ersten Lichtstrahls so geformt, dass beim gemeinsamen Fokussieren des ersten Lichtstrahls und des zweiten Lichtstrahls in eine Probe eine Intensitätsverteilung des Fluoreszenzverhinderungslichts mit einem von Intensitätsmaxima umgebenen lokalen Intensitätsminium und eine Intensitätsverteilung des Fluoreszenzanregungslichts mit einem Intensitätsmaximum am Ort des Intensitätsminimums der Intensitätsverteilung des Fluoreszenzverhinderungslichts ausgebildet wird. Diese Verwendung der erfindungsgemäßen Vorrichtung kann insbesondere zur Durchführung von hochauflösender Fluoreszenzlichtmikroskopie, insbesondere von STED-Fluoreszenzlichtmikroskopie und RESOLFT-Fluoreszenzlichtmikroskopie, erfolgen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Pockelszelle die Rede ist, ist dies so zu verstehen, dass genau eine Pockelszelle, zwei Pockelszellen oder mehr Pockelszellen vorhanden sind. Die in den Patentansprüchen angeführten Merkmale können durch andere Merkmale ergänzt werden oder die einzigen Merkmale sein, die die jeweilige Vorrichtung aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine axiale Draufsicht auf eine erste Ausführungsform der erfindungsgemäßen Vorrichtung mit vier in einer Richtung um eine optische Achse herum aufeinanderfolgenden Teilbereichen.
- **Fig. 2**: zeigt zwei segmentierte Phasenplatten jeweils in axialer Draufsicht, die aufeinander zu stapeln sind, um eine weitere Ausführungsform der erfindungsgemäßen Vorrichtung mit vier in Richtung um die optische Achse herum aufeinander folgenden verschiedenen Teilbereichen auszubilden.
- **Fig. 3**: ist eine Fig. 2 entsprechende Ansicht von zwei segmentierten Phasenplatten, die aufeinander zu stapeln sind, um eine Ausführungsform der erfindungsgemäßen Vorrichtung mit neun in Richtung um die optische Achse herum aufeinander folgenden verschiedenen Teilbereichen auszubilden.
- **Fig. 4**: ist eine Seitenansicht einer Ausführungsform der erfindungsgemäßen Vorrichtung mit einem zusätzlichen Polarisationsrotator.

### FIGURENBESCHREIBUNG

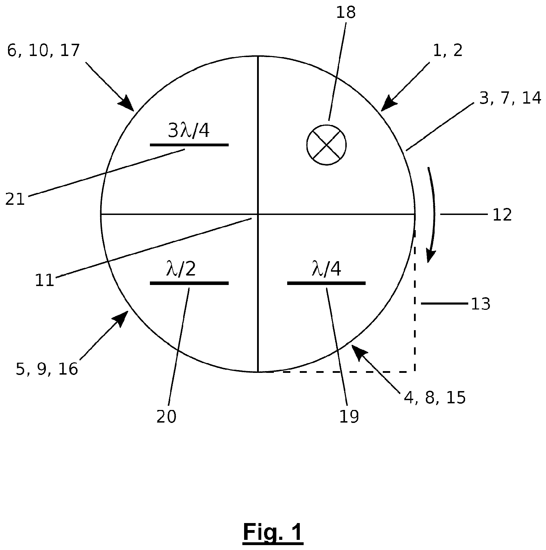

Bei der in **Fig. 1** dargestellten erfindungsgemäßen Vorrichtung 1 handelt es sich um eine segmentierte Phasenplatte 2. Entsprechend ist jeder von vier verschiedenen Teilbereichen 3 bis 6 der Vorrichtung 1 durch ein Plattensegment 7 bis 10 der segmentierten Phasenplatte 2 ausgebildet. Die Teilbereiche 3 bis 6 sind um eine optische Achse 11 der Vorrichtung 1 herum angeordnet und folgen dabei in einer Richtung 12 um die optische Achse 11 direkt aufeinander. Jeder der Teilbereiche 3 bis 6 erstreckt sich über einen gleichen Winkel von hier 90° um die optische Achse 11. Die Teilbereiche 3 bis 6 sind in Fig. 1 kreissegmentförmig dargestellt. Bei dem Teilbereich 4 ist jedoch mit einer gestrichelten Linie 13 angedeutet, dass jeder Teilbereich 3 bis 6 und das entsprechende Plattensegment 7 bis 10 auch beispielsweise quadratische oder andere rechteckige Abmessungen aufweisen könnte. Es umfasst aber auch dann einen kreissegmentförmigen Anteil.

Jedes der Plattensegmente 7 bis 10 besteht hier aus einem doppelbrechenden Material 14 bis 17, wobei die doppelbrechenden Materialien 14 bis 17 gleich sein können. Das doppelbrechende Material 14 in dem Teilbereich 3 ist so angeordnet, dass seine optische Kristallachse 18 parallel zu der optischen Achse 11 verläuft. Eine Phase eines längs der optischen Achse 11 einfallenden Lichtstrahls wird in dem Teilbereich 3 daher unabhängig von der Polarisation des Lichtstrahls verzögert. Alternativ könnte das Plattensegment 7 in dem Teilbereich 3 daher auch aus einem nichtdoppelbrechenden Material ausgebildet sein. Das Plattensegment 8 bildet für einen ersten längs der optischen Achse 11 einfallenden Lichtstrahl mit einer längs einer wirksamen Kristallachse 19 des doppelbrechenden Materials 15 verlaufenden linearen Eingangspolarisationsrichtung eine λ/4-Platte aus, so dass es die Phasen dieses Lichtstrahls, soweit er durch den Teilbereich 4 hindurchtritt, gegenüber den Phasen des Lichtstrahls, soweit er durch den Teilbereich 3 hindurchtritt, um π/2 verzögert. Für einen zweiten Lichtstrahl mit einer orthogonal zu der wirksamen Kristallachse 19 und der optischen Achse 11 verlaufenden linearen Eingangspolarisationsrichtung treten diese unterschiedlichen Phasenverzögerungen in den Teilbereichen 3 und 4 nicht auf.

Das doppelbrechende Material 16 in dem Teilbereich 5 weist eine parallel zu der wirksamen Kristallachse 19 verlaufende wirksame Kristallachse 20 auf. Für den längs der optischen Achse 11 einfallenden ersten Lichtstrahl mit der linearen Eingangspolarisationsrichtung längs der wirksamen Kristallachsen 19 und 20 bildet das Plattensegment 9 eine λ/2-Platte aus, so dass die Phase dieses Lichtstrahls in dem Teilbereich 5 gegenüber dem Teilbereich 3 um π verzögert wird. Die Phase des zweiten Lichtstrahls mit der orthogonal zu der optischen Achse 11 und der wirksamen Kristallachse 20 verlaufenden Eingangspolarisationsrichtung wird hingegen auch in dem Teilbereich 5 nicht anders verzögert als in dem Teilbereich 3. Das doppelbrechende Material 17 in dem Teilbereich 6 weist eine wirksame Kristallachse 21 auf, die parallel zu den wirksamen Kristallachsen 19 und 20 verläuft. Für den ersten Lichtstrahl mit der linearen Eingangspolarisationsrichtung längs der wirksamen Kristallachsen 19 bis 21 bildet das Plattensegment 10 eine 3λ/4-Platte aus, so dass seine Phasen gegenüber dem Teilbereich 3 um 3π/2 verzögert werden. Für den zweiten Lichtstrahl mit der zu der optischen Achse 11 und den wirksamen Kristallachsen 19 bis 21 orthogonal verlaufenden linearen Eingangspolarisationsrichtung tritt dieser Effekt nicht auf, so dass sich auch in dem Teilbereich 6 für ihn keine zusätzliche Phasenverzögerung gegenüber dem Teilbereich 3 ergibt.

Zusammenfassend bildet die Vorrichtung 1 für den ersten Lichtstrahl mit der orthogonal zu der optischen Achse 11 und parallel zu den wirksamen Kristallachsen 19 bis 21 verlaufenden Eingangspolarisationsrichtung eine diskretisierte Phasenuhr aus mit in der Richtung 12 von dem Teilbereich 3 an in π/2-Schritten gegen 2π ansteigenden Phasenverzögerungen. Für den zweiten Lichtstrahl mit der orthogonal zu der optischen Achse 11 und den wirksamen Kristallachsen 19 bis 21 verlaufenden linearen Eingangspolarisationsrichtung ergeben sich hingegen in den verschiedenen Teilbereichen 3 bis 6 keine verschiedenen Auswirkungen auf seine Phase. Dies schließt jedoch nicht aus, dass in den verschiedenen Teilbereichen 3 bis 6 Phasenverzögerungen auftreten, die sich um ein ganzzahliges Vielfaches von 2π unterscheiden.

Insbesondere kann die Vorrichtung 1 als easySTED-Phasenplatte Verwendung finden, wobei sie Fluoreszenzanregungslicht mit der linearen Eingangspolarisationsrichtung orthogonal zu der optischen Achse 11 und den wirksamen Kristallachsen 19 bis 21 unbeeinträchtigt lässt, so dass es von einem nachgeschalteten Objektiv so fokussiert wird, dass sich im Fokus ein Intensitätsmaximum des Fluoreszenzanregungslichts ergibt, während sie die Phasenfronten von Fluoreszenzverhinderungslicht mit einer linearen Eingangspolarisationsrichtung längs der wirksamen Kristallachsen 19 bis 21 so deformiert, dass es beim Fokussieren am Ort des Intensitätsmaximums des Anregungslichts ein lokales Intensitätsminimum, vorzugsweise eine Nullstelle, ausbildet, die in der Fokalebene allseitig von Intensitätsmaxima des Fluoreszenzverhinderungslichts begrenzt ist.

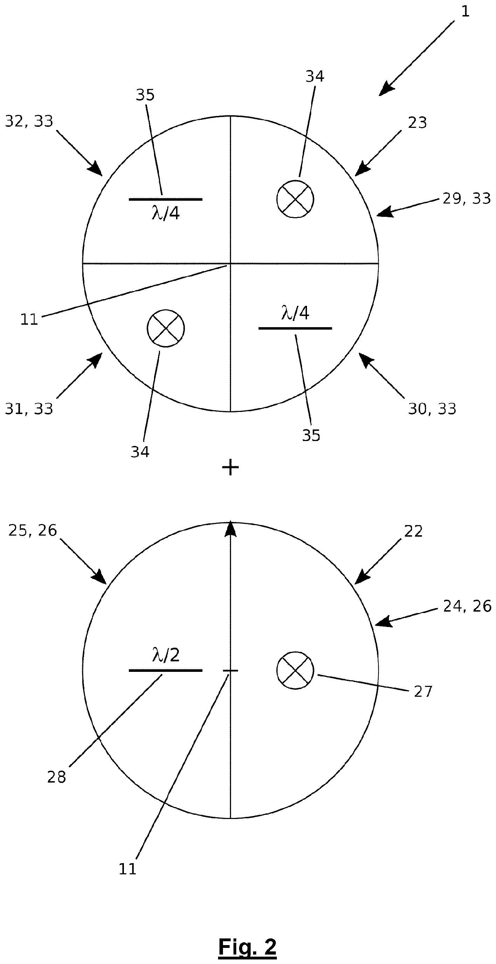

**Fig. 2** zeigt zwei segmentierte Phasenplatten 22 und 23, die in Richtung der optischen Achse 11 aufeinander zu stapeln sind, um eine Vorrichtung 1 zu erhalten, die in ihren vier Teilbereichen 3 bis 6 dieselben verschiedenen Phasenverzögerungen selektiv für den ersten Lichtstrahl mit der linearen Eingangspolarisationsrichtung längs der wirksamen Kristallachsen bewirkt. Die segmentierte Phasenplatte 22 weist nur zwei Plattensegmente 24 und 25 auf, die sich über jeweils zwei Teilbereiche 3 und 4 bzw. 5 und 6 der resultierenden Vorrichtung 1 erstrecken. Dabei bestehen beide Plattensegmente 24 und 25 aus demselben doppelbrechenden optischen Material 26, und sie weisen dieselbe Dicke oder Materialstärke längs der optischen Achse 11 auf. In dem Plattensegment 24 ist die optische Kristallachse 27 des doppelbrechenden Materials 26 parallel zu der optischen Achse 11 ausgerichtet. In dem Plattensegment 25 verläuft die wirksame Kristallachse 28 des doppelbrechenden Materials 26 parallel zu den wirksamen Kristallachsen 20 und 21 gemäß Fig. 1. Dabei bildet das Plattensegment 25 für den längs der optischen Achse 11 einfallenden ersten Lichtstrahl mit der parallel zu der wirksamen Kristallachse 28 verlaufenden Eingangspolarisationsrichtung eine λ/2-Platte aus.

Die auf die segmentierte Phasenplatte 22 von oben oder unten längs der optischen Achse 11 zu stapelnde segmentierte Phasenplatte 23 umfasst vier Plattensegmente 29 bis 32. Davon überdecken die Plattensegmente 29 und 30 bei der Vorrichtung 1 das Plattensegment 24 und die Plattensegmente 31 und 32 das Plattensegment 25. Alle Plattensegmente 29 bis 32 bestehen aus demselben doppelbrechenden optischen Material 33. Dabei kann das doppelbrechende optische Material 33 identisch mit dem doppelbrechenden Material 26 sein. In allen Plattensegmenten 29 bis 32 weist das doppelbrechende Material 33 dieselbe Dicke oder Materialstärke längs der optischen Achse 11 auf. In den Plattensegmenten 29 und 31 ist die optische Kristallachse 34 des doppelbrechenden Materials 33 parallel zu der optischen Achse 11 ausgerichtet. In den Plattensegmenten 30 und 32 verläuft die wirksame Kristallachse 35 des doppelbrechenden Materials 33 parallel zu den wirksamen Kristallachsen 19 und 21 gemäß Fig. 1. Dabei bilden die Plattensegmente 30 und 32 für den längs der optischen Achse 11 einfallenden ersten Lichtstrahl mit der parallel zu der wirksamen Kristallachse 35 verlaufenden Eingangspolarisationsrichtung jeweils eine λ/4-Platte aus.

Durch das Stapeln der beiden segmentierten Phasenplatten 22 und 23 ergeben sich in den Teilbereichen 3 bis 6 die anhand von Fig. 1 erläuterten Phasenverzögerungen. Diese werden mit jeweils gleichen Materialstärken längs der optischen Achse 11 in allen Teilbereichen 3 bis 6 erzielt und durch Ausbildung einer herkömmlichen λ/2-Platte durch das Plattensegment 25 und von zwei herkömmlichen λ/4-Platten durch die Plattensegmente 30 und 32.

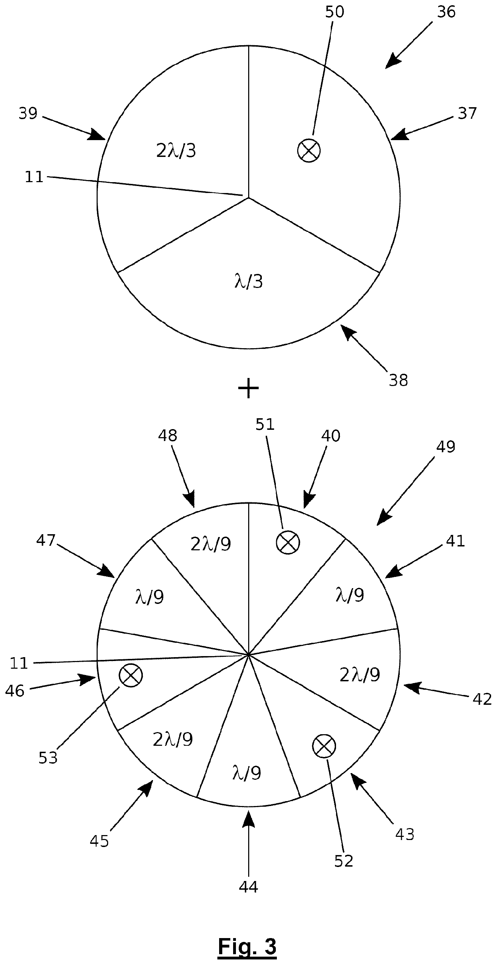

**Fig. 3** zeigt eine Erweiterung des Konzepts gemäß Fig. 2 mit zwei aufeinander zu stapelnden segmentierten Phasenplatten in Bezug auf die Anzahl der resultierenden verschiedenen Teilbereiche 3 bis 6 der Vorrichtung 1. Gemäß Fig. 3 weist eine segmentierte Phasenplatte 36 drei Plattensegmente 37 bis 39 auf, auf denen beim Stapeln jeweils drei Plattensegmente 40 bis 42, 43 bis 45 bzw. 46 bis 48 einer stärker segmentierten Phasenplatte 49 angeordnet werden. Dabei sind die optischen Kristallachsen 50 bis 53 der Plattensegmente 37, 40, 43 und 46 jeweils parallel zu der optischen Achse 11 angeordnet, und die verbleibenden Phasenplatten bilden selektiv für den längs der optischen Achse 11 einfallenden ersten Lichtstrahl mit der in Fig. 3 horizontal verlaufenden linearen Eingangspolarisationsrichtung Phasenplatten mit den in Fig. 3 angegebenen Verzögerungswerten. Für den ersten Lichtstrahl mit dieser linearen Eingangspolarisationsrichtung resultiert aus dem Stapel der segmentierten Phasenplatten 36 und 49 eine diskretisierte Phasenuhr mit in einer in der Richtung 12 gemäß Fig. 1 um die optische Achse 11 in Schritten von 2π/9 ansteigenden Phasenverzögerung.

Die nachfolgende Tabelle 1 gibt in der Doppelspalte "1. Segmentierte Phasenplatte" die durch die segmentierte Phasenplatte 36 gemäß Fig. 3 bewirkten Phasenverzögerungen für den ersten Lichtstrahl mit der auf die wirksame Kristallachse des doppelbrechenden Materials abgestimmten linearen Eingangspolarisationsrichtung an. Die mit "2. Segmentierte Phasenplatte" überschriebene Doppelspalte dokumentiert die durch die Plattensegmente der segmentierten Phasenplatte 49 gemäß Fig. 3 erzielten Phasenverzögerungen. Die dritte, mit "3. Segmentierte Phasenplatte" überschriebene Doppelspalte ergänzt weitere mögliche Phasenverzögerungen durch die Plattensegmente einer weiteren gestapelten segmentierten Phasenplatte. Die in den hier insgesamt 27 verschiedenen Teilbereichen der gesamten Vorrichtung resultierenden Phasenverzögerungen für den ersten Lichtstrahl mit der auf die wirksamen Kristallachsen abgestimmten linearen Eingangspolarisationsrichtung ergibt sich als Summe über die jeweiligen Zeilen der Tabelle 1. Die Phasenverzögerungen steigen bei einem Umlauf um die optische Achse 11 in der Richtung 12 gemäß Fig. 1 in Schritten von 2π/27 gegen 2π an.

**Tabelle 1**

| **1. Segmentierte Phasenplatte** | | **2. Segmentierte Phasenplatte** | | **3. Segmentierte Phasenplatte** | |
|---|---|---|---|---|---|
| Plattensegment | Phasenverzögerung | Plattensegment | Phasenverzögerung | Plattensegment | Phasenverzögerung |
| 1 | 0 | 1 | 0 | 1 | 0 |
| | | | | 2 | 2π/27 |
| | | | | 3 | 4π/27 |
| | | 2 | 2π/9 | 4 | 0 |
| | | | | 5 | 2π/27 |
| | | | | 6 | 4π/27 |
| | | 3 | 4π/9 | 7 | 0 |
| | | | | 8 | 2π/27 |
| | | | | 9 | 4π/27 |
| 2 | 2π/3 | 4 | 0 | 10 | 0 |
| | | | | 11 | 2π/27 |
| | | | | 12 | 4π/27 |
| | | 5 | 2π/9 | 13 | 0 |
| | | | | 14 | 2π/27 |
| | | | | 15 | 4π/27 |
| | | 6 | 4π/9 | 16 | 0 |
| | | | | 17 | 2π/27 |
| | | | | 18 | 4π/27 |
| 3 | 4π/3 | 7 | 0 | 19 | 0 |
| | | | | 20 | 2π/27 |
| | | | | 21 | 4π/27 |
| | | 8 | 2π/9 | 22 | 0 |
| | | | | 23 | 2π/27 |
| | | | | 24 | 4π/27 |
| | | 9 | 4π/9 | 25 | 0 |
| | | | | 26 | 2π/27 |
| | | | | 27 | 4π/27 |

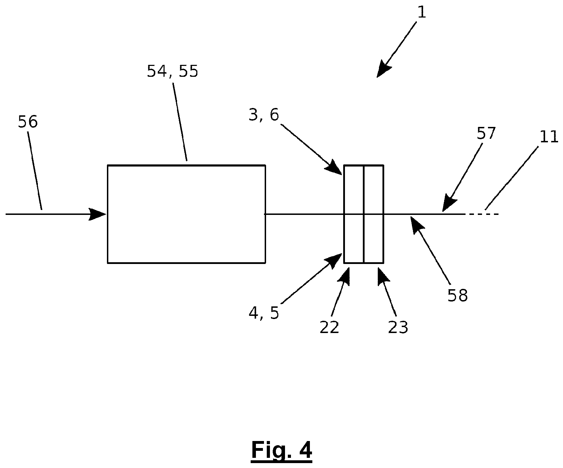

**Fig. 4** illustriert, dass bei der Vorrichtung 1, die grundsätzlich der Ausführungsform gemäß Fig. 2 mit zwei gestapelten segmentierten Phasenplatten 22 und 23 entspricht, vor den Teilbereichen 3 bis 6 ein Polarisationsrotator 54 angeordnet ist. Der Polarisationsrotator 54 kann beispielsweise als Pockelszelle 55 ausgebildet sein und eine zirkulare Eingangspolarisation eines Eingangslichtstrahls 56 alternierend in zueinander orthogonale und orthogonal zu der optischen Achse 11 verlaufende lineare Eingangspolarisationsrichtungen ändern. So treten aus dem Polarisationsrotator 54 alternierend der erste Lichtstrahl 57 mit der Eingangspolarisationsrichtung aus, die längs der wirksamen Kristallachsen der segmentierten Phasenplatten 22 und 23 verläuft, und der zweite Lichtstrahl 58, dessen lineare Eingangspolarisationsrichtung orthogonal zu den wirksamen Kristallachsen des doppelbrechenden Materials der segmentierten Phasenplatten 22 und 23 verläuft.

### BEZUGSZEICHENLISTE

- 1: Vorrichtung
- 2: segmentierte Phasenplatte
- 3: Teilbereich
- 4: Teilbereich
- 5: Teilbereich
- 6: Teilbereich
- 7: Plattensegment
- 8: Plattensegment
- 9: Plattensegment
- 10: Plattensegment
- 11: optische Achse
- 12: Richtung
- 13: gestrichelte Linie
- 14: doppelbrechendes Material
- 15: doppelbrechendes Material
- 16: doppelbrechendes Material
- 17: doppelbrechendes Material
- 18: optische Kristallachse
- 19: wirksame Kristallachse
- 20: wirksame Kristallachse
- 21: wirksame Kristallachse
- 22: segmentierte Phasenplatte
- 23: segmentierte Phasenplatte
- 24: Plattensegment
- 25: Plattensegment
- 26: doppelbrechendes Material
- 27: optische Kristallachse
- 28: wirksame Kristallachse
- 29: Plattensegment
- 30: Plattensegment
- 31: Plattensegment
- 32: Plattensegment
- 33: doppelbrechendes Material
- 34: optische Kristallachse
- 35: wirksame Kristallachse
- 36: segmentierte Phasenplatte
- 37: Plattensegment
- 38: Plattensegment
- 39: Plattensegment
- 40: Plattensegment
- 41: Plattensegment
- 42: Plattensegment
- 43: Plattensegment
- 44: Plattensegment
- 45: Plattensegment
- 46: Plattensegment
- 47: Plattensegment
- 48: Plattensegment
- 49: segmentierte Phasenplatte
- 50: optische Kristallachse
- 51: optische Kristallachse
- 52: optische Kristallachse
- 53: optische Kristallachse
- 54: Polarisationsrotator
- 55: Pockelszelle
- 56: Eingangslichtstrahl
- 57: erster Lichtstrahl
- 58: zweiter Lichtstrahl

## Patentansprüche

1. Vorrichtung (1) für das selektive Formen von Phasenfronten eines ersten längs einer optischen Achse (11) einfallenden Lichtstrahls (57) mit einer ersten linearen und orthogonal zu der optischen Achse (11) verlaufenden Eingangspolarisationsrichtung, wobei die Vorrichtung (1)
- doppelbrechendes optisches Material (14-17, 26, 33) aufweist,
- eine erste Phase des ersten Lichtstrahls (57) in verschiedenen Teilbereichen (3-6) der Vorrichtung (1) verschieden verzögert und
- eine zweite Phase eines zweiten längs der optischen Achse (11) einfallenden Lichtstrahls (58) mit einer zu der ersten linearen Eingangspolarisationsrichtung und zu der optischen Achse (11) orthogonalen zweiten Eingangspolarisationsrichtung in den verschiedenen Teilbereichen (3-6) nicht verschieden verzögert,
- wobei die verschiedenen Teilbereiche (3-6) in einer Richtung (12) um die optische Achse (11) herum aufeinander folgen, wobei das doppelbrechende optische Material (14-17, 26, 33) in allen oder allen bis auf einen der verschiedenen Teilbereiche (3-6) angeordnet ist,
**dadurch gekennzeichnet,**
- **dass** die erste Phase des ersten Lichtstrahls (57) in mindestens drei verschiedenen Teilbereichen (3-6) der Vorrichtung (1) verschieden verzögert wird, wobei das doppelbrechende optische Material (14-17, 26, 33) den ersten Lichtstrahl (57) mit der ersten Eingangspolarisationsrichtung bezüglich seiner Phase in einem von Teilbereich (3-6) zu Teilbereich (3-6) über eine Umrundung der optischen Achse (11) in der Richtung (12) zunehmenden Maße verzögert.

2. Vorrichtung (1) nach Anspruch 1, **dadurch gekennzeichnet, dass** die erste Phase des ersten Lichtstrahls (57) in mindestens vier oder mindestens sechs verschiedenen Teilbereichen (3-6) der Vorrichtung (1) verschieden verzögert wird.

3. Vorrichtung (1) nach Anspruch 1 oder 2, **dadurch gekennzeichnet, dass** die verschiedenen Teilbereiche (3-6) jeweils einen Anteil aufweisen, der in einer Projektion längs der optischen Achse (11) kreissegmentförmig ist und in beiden Richtungen (12) um die optische Achse (11) an einen kreissegmentförmigen Anteil eines benachbarten Teilbereichs (3-6) angrenzt.

4. Vorrichtung (1) nach Anspruch 3, **dadurch gekennzeichnet, dass** sich die kreissegmentförmigen Anteile der verschiedenen Teilbereiche (3-6) über gleiche Winkel um die optische Achse (11) erstrecken.

5. Vorrichtung (1) nach einem der vorhergehenden Ansprüche, **dadurch gekennzeichnet, dass** bei n verschiedenen Teilbereichen (3-6) das Maß der Verzögerung der Phasen des ersten Lichtstrahls (57) von Teilbereich (3-6) zu Teilbereich (3-6) um 2π/*n* zunimmt.

6. Vorrichtung (1) nach einem der vorhergehenden Ansprüche, **dadurch gekennzeichnet, dass** die wirksamen Kristallachsen (19-21, 28, 35) des doppelbrechenden Materials (14-17, 26, 33) in allen verschiedenen Teilbereichen (4-6), die die Phase des ersten Lichtstrahls (57) anders als die Phase des zweiten Lichtstrahls (58) verzögern, parallel zueinander ausgerichtet sind.

7. Vorrichtung (1) nach einem der vorhergehenden Ansprüche, **dadurch gekennzeichnet, dass** jeder der verschiedenen Teilbereiche (3-6) durch ein Plattensegment (7-10) einer segmentierten Phasenplatte (2) ausgebildet ist.

8. Vorrichtung (1) nach einem Ansprüche 1 bis 6, **dadurch gekennzeichnet, dass** in jedem der verschiedenen Teilbereiche (3-6) mindestens zwei Plattensegmente (24, 25, 29-32, 37-48) von mindestens zwei gestapelten segmentierten Phasenplatten (22, 23, 36, 49) längs der optischen Achse (11) aufeinander folgen.

9. Vorrichtung (1) nach Anspruch 8, **dadurch gekennzeichnet, dass** eine der mindestens zwei segmentierten Phasenplatten (23, 49) m-mal so viele Plattensegmente (29-32, 40-48) wie eine andere der mindestens zwei segmentierten Phasenplatten (22, 36) aufweist, wobei jeweils m Plattensegmente (29-32, 40-48) der einen der mindestens zwei segmentierten Phasenplatten (23, 49) auf einem Plattensegment (24, 25, 37-39) der anderen der mindestens zwei segmentierten Phasenplatten (22, 36) angeordnet ist.

10. Vorrichtung (1) nach Anspruch 9, **dadurch gekennzeichnet,**
- **dass** die andere der mindestens zwei segmentierten Phasenplatten (22) zwei Plattensegmente (24, 25) aufweist, die die Phase des zweiten Lichtstrahls (58) um gleiche Beträge verzögern und die die Phase des ersten Lichtstrahls (57) um sich um n unterscheidende Beträge verzögern, und
- **dass** die eine der mindestens zwei segmentierten Phasenplatten (23) vier Plattensegmente (29-32) aufweist, die die Phase des zweiten Lichtstrahls (58) um gleiche Beträge verzögern und von denen zwei erste Plattensegmente (30, 32) die Phase des ersten Lichtstrahls gegenüber zwei zweiten Plattensegmenten (29, 31) um sich um π/2 unterscheidende Beträge verzögern, wobei die ersten Plattensegmente (30, 32) und die zweiten Plattensegmente (29, 31) in der Richtung (12) um die optische Achse (11) alternierend aufeinander folgen.

11. Vorrichtung (1) nach einem der vorhergehenden Ansprüche, **dadurch gekennzeichnet, dass** die optische Kristallachse (27, 34, 50-53) des doppelbrechenden optischen Materials (14, 26, 33) in allen verschiedenen Teilbereichen (1), die die Phase des ersten Lichtstrahls (57) und die Phase des zweiten Lichtstrahls (58) gleich verzögern, oder in allen Plattensegmenten (24, 29, 31, 37, 40, 43, 46), die die Phase des ersten Lichtstrahls (57) und die Phase des zweiten Lichtstrahls (58) gleich verzögern, parallel zu der optischen Achse (11) ausgerichtet ist.

12. Vorrichtung (1) nach einem der vorhergehenden Ansprüche, **dadurch gekennzeichnet, dass** alle verschiedenen Teilbereiche (3-6) oder zumindest alle Plattensegmente (24, 25, 29-32) der jeweiligen segmentierten Phasenplatte (22, 23) aus demselben doppelbrechenden Material (26, 33) ausgebildet sind.

13. Vorrichtung (1) nach einem der vorhergehenden Ansprüche, **dadurch gekennzeichnet, dass** alle verschiedenen Teilbereiche (3-6) und optional alle Plattensegmente (24, 25, 29-32, 37-48) jeder segmentierten Phasenplatte (22, 23, 36, 49) gleiche Erstreckungen längs der optischen Achse (11) aufweisen.

14. Vorrichtung (1) nach einem der vorhergehenden Ansprüche, **dadurch gekennzeichnet, dass** vor den verschiedenen Teilbereichen (3-6) ein Polarisationsrotator (54) auf der optischen Achse (11) angeordnet ist, der zwischen einem ersten und einem zweiten Zustand überführbar ist, wobei der Polarisationsrotator (54) in dem ersten Zustand eine Polarisation eines Eingangslichtstrahls (56) in die erste lineare Eingangspolarisationsrichtung des ersten Lichtstrahls (57) ändert und in dem zweiten Zustand die Polarisation des Eingangslichtstrahls (56) in die zweite lineare Eingangspolarisationsrichtung des zweiten Lichtstrahls (58) ändert, wobei der Polarisationsrotator (54) optional eine Pockelszelle (55) aufweist.

15. Verwendung einer Vorrichtung (1) nach einem der vorhergehenden Ansprüche in einem gemeinsamen Strahlengang eines ersten Lichtstrahls (57) aus Fluoreszenzverhinderungslicht und eines zweiten Lichtstrahls (58) aus Fluoreszenzanregungslicht,
- wobei selektiv die Phasenfronten des ersten Lichtstrahls (57) so geformt werden, dass beim gemeinsamen Fokussieren des ersten Lichtstrahls (57) und des zweiten Lichtstrahls (58) in eine Probe eine Intensitätsverteilung des Fluoreszenzverhinderungslichts mit einem von Intensitätsmaxima umgebenen lokalen Intensitätsminimum und eine Intensitätsverteilung des Fluoreszenzanregungslichts mit einem Intensitätsmaximum am Ort des Intensitätsminimums der Intensitätsverteilung des Fluoreszenzverhinderungslichts ausgebildet wird.

## Claims

1. Apparatus (1) for selectively shaping phase fronts of a first light beam (57) incident along an optical axis (11) and having a first linear input polarization direction running orthogonal to the optical axis (11), wherein the apparatus (1)
- comprises birefringent optical material (14-17, 26, 33),
- delays a first phase of the first light beam (57) differently in different partial areas (3-6) of the apparatus (1), and
- does not delay a second phase of a second light beam (58) incident along the optical axis (11) and having a second linear input polarization direction orthogonal to the first linear input polarization direction and to the optical axis (11) differently in the different partial areas (3-6),
- wherein the different partial areas (3-6) follow to one another in a direction (12) around the optical axis (11), wherein the birefringent optical material (14-17, 26, 33) is arranged in all or all bar one of the different partial areas (3-6),
**characterized in**
- **that** the first phase of the first light beam (57) is delayed differently in at least three different partial areas (3-6) of the apparatus (1), wherein the birefringent optical material (14-17, 26, 33) delays the first light beam (57) having the first input polarization direction with regard to its phase to an extent increasing in the direction (12) from partial area (3-6) to partial area (3-6) over a round around the optical axis (11).

2. Apparatus (1) of claim 1, **characterized in that** the first phase of the first light beam (57) is delayed differently in at least four or at least six different partial areas (3-6) of the apparatus (1).

3. Apparatus (1) of claim 1 or 2, **characterized in that** the different partial areas (3-6) each have a portion that is circle segment-shaped in a projection along the optical axis (11) and that adjoins a circle segment-shaped portion of a neighboring partial area (3-6) in both directions (12) around the optical axis (11).

4. Apparatus (1) of claim 3, **characterized in that** the circle segment-shaped portions of the different partial areas (3-6) extend over same angles around the optical axis (11).

5. Apparatus (1) of any of the preceding claims, **characterized in that**, with n different partial areas (3-6), the extent of the delay of the phases of the first light beam (57) increases by 2π/*n* from partial area (3-6) to partial area (3-6).

6. Apparatus (1) of any of the preceding claims, **characterized in that** the effective crystal axes (19-21, 28, 35) of the birefringent material (14-17, 26, 33) are aligned parallel to each other in all of the different partial areas (4-6) that differently delay the phase of the first light beam (17) as compared to the phase of the second light beam (58).

7. Apparatus (1) of any of the preceding claims, **characterized in that** each of the different partial areas (3-6) is made as a plate segment (7-10) of a segmented phase plate (2).

8. Apparatus (1) of any of the claims 1 to 6, **characterized in that** at least two plate segments (24, 25, 29-32, 37-48) of at least two stacked segmented phase plates (22, 23, 36, 49) follow to each other along the optical axis (11) in each of the different partial areas (3-6).

9. Apparatus (1) of claim 8, **characterized in that** one of the at least two segmented phase plates (23, 49) comprises *m*-times as many plate segments (29-32, 40, 48) as another of the at least two segmented phase plates (22, 36), wherein *m* plate segments (29-32, 40-48) of the one of the at least two segmented phase plates (23, 49) are arranged on every plate segment (24, 25, 37-39) of the other of the at least two segmented phase plates.

10. Apparatus (1) of claim 9, **characterized in**
- **that** the other of the at least two segmented phase plates (22) has two plate segments (24, 25), which delay the phase of the second light beam (58) by same amounts and the phase of the first light beam (57) by amounts differing by π, and
- **that** the one of the at least two segmented phase plates (23) has four plate segments (29-32), which delay the phase of the second light beam (58) by same amounts and of which two first plate segments (30, 32), as compared to two second plate segments (29, 31), delay the phase of the first light beam by amounts differing by π/2, wherein the first plate segments (30, 32) and the second plate segments (29, 31) alternately follow to each other in the direction (12) around the optical axis (11).

11. Apparatus (1) of any of the preceding claims, **characterized in that** the optical crystal axis (27, 34, 50-53) of the birefringent optical material (14, 26, 33) is aligned parallel to the optical axis (11) in all of the different partial areas (1) that equally delay the phase of the first light beam (57) and the phase of the second light beam (58) or in all of the plate segments (24, 29, 31, 37, 40, 43, 46) that equally delay the phase of the first light beam (57) and the phase of the second light beam (58).

12. Apparatus (1) of any of the preceding claims, **characterized in that** all different partial areas (3-6) or at least all plate segments (24, 25, 29-32) of the respective segmented phase plate (22, 23) are made of the same birefringent material (26, 33).

13. Apparatus (1) of any of the preceding claims, **characterized in that** all different partial areas (3-6) and optionally all plate segments (24, 25, 29-32, 37-48) of all segmented phase plates (22, 23, 36, 49) have same extensions along the optical axis (11).

14. Apparatus (1) of any of the preceding claims, **characterized in that** a polarization rotator that is transferable between a first and a second state is arranged upstream of the different partial areas (3-6) on the optical axis (11), wherein the polarization rotator (54), in the first state, alters a polarization of an input light beam (56) in the first linear input polarization direction of the first light beam (57), and, in the second state, alters the polarization of the input light beam (56) in the second linear input polarization direction of the second light beam (58), wherein the polarization rotator (54) optionally comprises a Pockels cell (55).

15. Use of an apparatus (1) of any of the preceding claims in a common beam path of a first light beam (57) of fluorescence inhibition light and a second light beam (58) of fluorescence excitation light,
- wherein the phase fronts of the first light beam (57) are shaped selectively such that, in focusing the first light beam (57) and the second light beam (58) together in a sample, an intensity distribution of the fluorescence inhibition light having a local intensity minimum surrounded by intensity maxima and an intensity distribution of the fluorescence excitation light having an intensity maximum at the location of the intensity minimum of the intensity distribution of the fluorescence inhibition light is formed.

## Revendications

1. Dispositif (1) pour la formation sélective de fronts de phase d'un premier faisceau lumineux (57) arrivant le long d'un axe optique (11), avec une première direction de polarisation d'entrée s'étendant de manière linéaire et orthogonale par rapport à l'axe optique (11), dans lequel le dispositif (1)
- comprend un matériau optique biréfringent (14 - 17, 26, 33),
- retarde différemment une première phase du premier faisceau lumineux (57) dans différents parties (3 - 6) du dispositif (1) et
- ne retarde pas de manière différente une deuxième phase d'un deuxième faisceau lumineux (58) arrivant le long de l'axe optique (11) avec une deuxième direction de polarisation d'entrée orthogonale par rapport à la première direction de polarisation d'entrée linéaire et à l'axe optique (11) dans les différentes parties (3 - 6),
- dans lequel les différentes parties (3 - 6) se succèdent dans une direction (12) autour de l'axe optique (11), dans lequel le matériau biréfringent (14 - 17, 26, 33) est disposé dans toutes les différentes parties (3 - 6) ou dans toutes sauf une,
**caractérisé en ce que**
- la première phase du premier faisceau lumineux (57) est retardée différemment dans au moins trois différentes parties (3 - 6) du dispositif (1), dans lequel le matériau optique biréfringent (14 - 17, 26, 33) retarde le premier faisceau lumineux (57) avec la première direction de polarisation d'entrée par rapport à sa phase de manière croissante d'une partie (3 - 6) à l'autre (3 - 6) sur un tour de l'axe optique (11) dans la direction (12).

2. Dispositif (1) selon la revendication 1, **caractérisé en ce que** la première phase du premier faisceau lumineux (57) est retardée différemment dans au moins quatre ou au moins six différentes parties (3 - 6) du dispositif (1).

3. Dispositif (1) selon la revendication 1 ou 2, **caractérisé en ce que** les différentes parties (3-6) comprennent chacune une portion qui présente la forme d'un segment circulaire dans une projection le long de l'axe optique (11) et qui est adjacente, dans les deux directions (12) autour de l'axe optique (11) à une portion présentant la forme d'un segment circulaire d'une partie (3 - 6) adjacente.

4. Dispositif (1) selon la revendication 3, **caractérisé en ce que** les portions présentant la forme de segments circulaires des différentes parties (3 - 6) s'étendent sur des angles identiques autour de l'axe optique (11).

5. Dispositif (1) selon l'une des revendications précédentes, **caractérisé en ce que**, pour n différentes parties (3 - 6), la valeur du retard des phases du premier faisceau lumineux (57) d'une partie (3 - 6) à l'autre (3 - 6) augmente de 2π/n.

6. Dispositif (1) selon l'une des revendications précédentes, **caractérisé en ce que** les axes cristallins efficaces (19-21, 28, 35) du matériau biréfringent (14- 17, 26, 33) dans toutes les différentes parties (4 - 6) qui retardent la phase du premier faisceau (57) d'une manière différente de la phase du deuxième faisceau lumineux (58), sont orientés de manière parallèle entre eux.

7. Dispositif (1) selon l'une des revendications précédentes, **caractérisé en ce que** chacune des différentes parties (3 - 6) est constituée d'un segment de plaque (7 - 10) d'une plaque de phase segmentée (2).

8. Dispositif (1) selon l'une des revendications 1 à 6, **caractérisé en ce que**, dans chacune des différentes parties (3 - 6), au moins deux segments de plaques (24, 25, 29 - 32, 37 - 48) d'au moins deux plaques de phases segmentées (22, 23, 36, 49) empilées, se succèdent le long de l'axe optique (11).

9. Dispositif (1) selon la revendication 8, **caractérisé en ce qu'**une des deux plaques de phases segmentées (23, 49), comprend m fois plus de segments de plaques (29 - 32, 40 - 48) qu'une autre des au moins deux plaques de phases segmentées (22, 36), dans lequel m segments de plaques (29 - 32, 40 - 48) de l'une des au moins deux plaques de phases segmentées (23, 49) sont disposés sur un segment de plaque (24, 25, 37 - 39) de l'autre des au moins deux plaques de phases segmentées (22, 36).

10. Dispositif (1) selon la revendication 9, **caractérisé en ce que**
- l'autre des au moins deux plaques de phases segmentées (22) comprend deux segments de plaques (24, 25) qui retardent la phase du deuxième faisceau lumineux (58) des mêmes valeurs et qui retardent la phase du premier faisceau lumineux (57) de valeurs différentes de π et
- l'une des au moins deux plaques de phases segmentées (23) comprend quatre segments de plaques (29 - 32) qui retardent la phase du deuxième faisceau lumineux (58) des mêmes valeurs et dont deux premiers segments de plaques (30, 32) retardent la phase du premier faisceau lumineux par rapport à deux deuxièmes segments de plaques (29, 31) de valeurs différentes de π/2, dans lequel les premiers segments de plaques (30, 32) et les deuxièmes segments de plaques (29, 31) se succèdent de manière alternée dans la direction (12) autour de l'axe optique (11).

11. Dispositif (1) selon l'une des revendications précédentes, **caractérisé en ce que** l'axe cristallin optique (27, 34, 50 - 53) du matériau optique biréfringent (14, 26, 33), dans toutes les différentes parties (1) qui retardent la phase du premier faisceau lumineux (57) et la phase du deuxième faisceau lumineux (58) de manière identique, ou dans tous les segments de plaques (24, 29, 31, 37, 40, 43, 46), qui retardent la phase du premier faisceau lumineux (57) et la phase du deuxième faisceau lumineux (58) de manière identique, est orienté parallèlement à l'axe optique (11).

12. Dispositif (1) selon l'une des revendications précédentes, **caractérisé en ce que** toutes les différentes parties (3 - 6) ou au moins tous les segments de plaques (24, 25, 29 - 32) de la plaque de phase segmentée (22, 23) respective sont constitués du même matériau optique biréfringent (26, 33).

13. Dispositif (1) selon l'une des revendications précédentes, **caractérisé en ce que** toutes les différentes parties (3 - 6) et, en option, au moins tous les segments de plaques (24, 25, 29 - 32, 37 - 48) de chaque plaque de phase (22, 23, 36, 49) présentent la même extension le long de l'axe optique (11).

14. Dispositif (1) selon l'une des revendications précédentes, **caractérisé en ce que**, avant les différentes parties (3 - 6), un rotateur de polarisation (54) est disposé sur l'axe optique (11), qui peut être mis dans un premier et un deuxième état, dans lequel le rotateur de polarisation (54), dans le premier état, modifie une polarisation d'un faisceau lumineux d'entrée (56) vers la première direction de polarisation d'entrée linéaire du premier faisceau lumineux (57) et, dans le deuxième état, modifie la polarisation du faisceau lumineux d'entrée (56) vers la deuxième direction de polarisation d'entrée linéaire du deuxième faisceau lumineux (58), dans lequel le rotateur de polarisation (54) comprend, en option, une cellule de Pockels (55).

15. Utilisation d'un dispositif (1) selon l'une des revendications précédentes dans un trajet de faisceau commun d'un premier faisceau lumineux (57) de lumière inhibant la fluorescence et d'un deuxième faisceau lumineux (58) de lumière excitant la fluorescence,
- dans lequel, de manière sélective, les fronts de phase du premier faisceau lumineux (57) sont formés de façon à ce que, lors d'une focalisation commune du premier faisceau lumineux (57) et du deuxième faisceau lumineux (58) dans un échantillon, une distribution d'intensité de la lumière inhibant la fluorescence est formée avec un minimum d'intensité local entouré de maxima d'intensité et une distribution d'intensité de la lumière excitant la fluorescence avec un maximum d'intensité à l'endroit du minimum d'intensité de la distribution d'intensité de la lumière inhibant la fluorescence.
